# FASCICULE DE BREVET EUROPEEN

(11) **EP 4 673 989 B1**
(45) Date de publication et mention de la délivrance du brevet: **04.11.2026**
(21) Numéro de dépôt: 24707044.4
(22) Date de dépôt: 23.02.2024
(51) Int. Cl.: H01M 10/00

(54) **DISPOSITIF DE RÉGULATION THERMIQUE AVEC COLLECTEUR CENTRAL**
WÄRMEREGELUNGSVORRICHTUNG MIT ZENTRALEM KOLLEKTOR
THERMAL REGULATION DEVICE WITH CENTRAL COLLECTOR

(30) Priorité: 27.02.2023 FR 2301757
(43) Date de publication de la demande: 07.01.2026
(73) Titulaire: Valeo Electrification, 95892 Cergy Pontoise (FR)
(72) Inventeur: IBRAHIMI, Mohamed, 78320 Le Mesnil-Saint-Denis (FR); ROBILLON, Lionel, 78320 Le Mesnil-Saint-Denis (FR)
(74) Mandataire: Valeo Powertrain Systems
(86) Numéro de dépôt international: PCT/EP2024/054723
(87) Numéro de publication internationale: WO 2024/179944

(56) Documents cités:
- DE-A1- 102019 127 808
- GB-A- 2 586 058
- US-A1- 2019 319 319

## Description

La présente invention concerne le domaine des dispositifs de régulation thermique et plus particulièrement les moyens mis en œuvre pour réguler la température d'organes de stockage d'énergie électrique équipant des véhicules. De manière plus spécifique, la présente invention se rapporte à un dispositif de régulation thermique tel que défini par le préambule de la revendication 1 et tel que divulgué par le document US2019 319319A.

Il est connu de nos jours d'équiper des véhicules électriques ou hybrides de systèmes de stockage d'énergie électrique permettant une alimentation électrique des différents éléments du véhicule. Ces systèmes de stockage d'énergie électrique sont généralement composés d'organes de stockage d'énergie électrique ou cellules de stockage d'énergie électrique, positionnés dans un module de batterie ou pack-batterie.

Lors du fonctionnement du véhicule, les packs-batterie peuvent dégager une quantité de chaleur importante et dès lors être soumis à des températures élevées au sein du module pouvant provoquer dans certains cas des pertes de performance, leur endommagement, voire leur destruction. Par conséquent, leur refroidissement est essentiel afin de les maintenir en bon état et d'assurer ainsi la fiabilité, l'autonomie et la performance du véhicule.

Par ailleurs, le fonctionnement des packs-batterie peut être moins efficace en cas de basses températures, les composants électriques ou électroniques équipant ces packs-batterie ayant alors besoin d'un temps de montée en température avant de fonctionner à plein rendement.

Pour ce faire, un ou plusieurs dispositifs de régulation thermique destinés à réguler la température des packs-batterie sont mis en œuvre pour assurer les fonctions de chauffage et/ou de refroidissement des composants électriques ou électroniques à l'intérieur de ces packs-batteries et ainsi optimiser le fonctionnement des différents composants.

Ces dispositifs de régulation thermique sont généralement parcourus par un fluide de régulation thermique qui peut selon les besoins soit absorber la chaleur émise par chaque pack-batterie afin de le refroidir, soit apporter de la chaleur si la température du pack-batterie est insuffisante pour son bon fonctionnement.

Les packs-batteries peuvent être constitués, par exemple, de rangées d'organes de stockage d'énergie électrique prenant la forme de cellules cylindriques ou tubulaires. Des dispositifs de régulation thermique prenant la forme de plaques ondulées peuvent être interposés entre de telles rangées, le fluide de régulation thermique traversant alors ces plaques ondulées afin de récupérer ou de céder des calories avec les cellules cylindriques au contact desquelles les plaques du dispositif de régulation thermique sont disposées.

Il est connu dans l'art antérieur de proposer des dispositifs de régulation thermique dans lequel un collecteur, qui permet à la fois une entrée et une sortie de fluide, est placé à une extrémité longitudinale du dispositif de régulation thermique. Le fluide de régulation thermique circule alors depuis l'extrémité longitudinale porteuse de ce collecteur jusqu'à l'extrémité longitudinale opposée, puis revient jusqu'au collecteur en sens inverse. Une telle disposition ne permet cependant pas une bonne homogénéité dans l'échange de calories entre le fluide de régulation thermique et chacune des cellules cylindriques au contact du dispositif de régulation thermique, le fluide de régulation thermique étant amené à circuler sur un long trajet au sein du dispositif de régulation thermique.

La présente invention vise à pallier cet inconvénient en proposant un dispositif de régulation thermique qui permet une répartition la plus homogène possible des échanges de calories et donc une homogénéité de température des cellules, le dispositif de régulation thermique présentant par ailleurs des facilités de raccordement au sein d'un pack-batterie. Un tel dispositif de régulation thermique est obtenu en positionnant le collecteur en une portion sensiblement centrale du dispositif de régulation thermique, c'est-à-dire entre ses deux extrémités longitudinales.

La présente invention a ainsi pour principal objet un dispositif de régulation thermique tel que défini par la revendication 1.

Le dispositif de régulation thermique selon l'invention est destiné à équiper un véhicule, par exemple un véhicule automobile, en vue du refroidissement et/ou du chauffage de ses organes de stockage d'énergie électrique, qui sont par exemple des cellules cylindriques. Le dispositif de régulation thermique présente ainsi au moins une face latérale au contact des organes de stockage d'énergie électrique. Ce dispositif de régulation thermique présente une direction d'extension principale qui correspond à une direction longitudinale, le fluide caloporteur s'écoulant au sein du dispositif de régulation thermique dans cette direction selon un premier sens et un deuxième sens opposés l'un à l'autre. Le fluide caloporteur s'écoule plus précisément dans des canaux ménagés dans des tubes du dispositif de régulation thermique, parmi lesquels un premier tube et un deuxième tube. Ces tubes sont des tubes corrugués, au sein desquels les canaux sont disposés de façon parallèle les uns aux autres d'une première extrémité longitudinale des tubes à une deuxième extrémité longitudinale de ceux-ci. Les canaux de chaque tube sont répartis en deux ensembles de circulation, chaque ensemble de circulation correspondant à un sens de circulation du fluide caloporteur. On comprend ainsi que pour un tube donné, le fluide caloporteur circule selon un premier sens dans le premier ensemble de circulation, et selon un deuxième sens dans le deuxième ensemble de circulation.

Le fluide caloporteur est acheminé jusqu'au dispositif de régulation thermique et évacué de celui-ci par l'intermédiaire d'un collecteur, qui comprend à cet effet une entrée de fluide et une sortie de fluide. L'entrée de fluide est disposée d'un premier côté d'un plan longitudinal-transversal qui partage le dispositif de régulation thermique en deux parties sensiblement égales, la sortie de fluide étant disposée d'un deuxième côté de ce plan longitudinal-transversal. Le collecteur est ainsi à cheval sur le plan longitudinal-transversal, ce collecteur s'étendant principalement le long d'un plan sensiblement perpendiculaire au plan longitudinal-transversal. Le collecteur est disposé en une portion centrale du dispositif de régulation thermique, c'est-à-dire à distance de la première extrémité longitudinale et de la deuxième extrémité longitudinale. Plus particulièrement, le collecteur peut être disposé sensiblement à équidistance de cette première extrémité longitudinale et de cette deuxième extrémité longitudinale. Un tel positionnement central permet une homogénéité de la régulation thermique de part et d'autre du collecteur, c'est-à-dire dans chacun des tubes depuis ce collecteur jusqu'à chaque boîte de renvoi. La disposition du collecteur facilite en outre le raccordement du dispositif de régulation thermique, par exemple au sein d'un boîtier d'un pack-batterie du véhicule.

Selon une caractéristique optionnelle de l'invention, les embouts sont disposés dans un prolongement du collecteur, au voisinage de la première extrémité transversale du dispositif de régulation thermique.

Le premier embout de raccordement et le deuxième embout de raccordement sont ainsi disposés dans un prolongement de l'entrée de fluide et de la sortie de fluide respectivement. Ces embouts sont tous deux disposés au voisinage de la première extrémité transversale, et sont de ce fait disposés sensiblement à une même hauteur afin de faciliter leur montage sur le dispositif de régulation thermique.

Selon une caractéristique optionnelle de l'invention, le collecteur est brasé sur les tubes.

Le collecteur, le premier tube et le deuxième tube forment ainsi un ensemble monobloc, c'est-à-dire qu'ils sont indissociables sans détérioration de l'un ou l'autre de ces éléments. Une solidarisation par brasage permet de limiter les fuites lors du passage du fluide caloporteur du collecteur aux tubes ou inversement.

Selon une caractéristique optionnelle de l'invention, chaque boîte de renvoi relie fluidiquement le premier ensemble de circulation et le deuxième ensemble de circulation d'un tube.

La boîte de renvoi permet ainsi une circulation du fluide caloporteur en U au sein d'un tube donné, ce fluide caloporteur passant du premier ensemble de circulation au deuxième ensemble de circulation par l'intermédiaire de la boîte de renvoi. Ainsi, la boîte de renvoi permet au fluide caloporteur de changer de sens de circulation. Du fait de la disposition du collecteur et des boîtes de renvoi, le fluide caloporteur circule dans un premier temps à la fois dans le premier ensemble de circulation du premier tube et dans celui du deuxième tube, puis il traverse les boîtes de renvoi et circule dans un deuxième temps à la fois dans le deuxième ensemble de circulation du premier tube et dans celui du deuxième tube.

Selon une caractéristique optionnelle de l'invention, la première extrémité des tubes comprend une première portion pliée reliée fluidiquement au premier ensemble de circulation et une deuxième portion pliée reliée fluidiquement au deuxième ensemble de circulation, les portions pliées étant séparées l'une de l'autre par une entaille formée dans le tube, les portions pliées débouchant dans le collecteur.

Il s'agit ici d'un premier mode de réalisation, dans lequel le collecteur comprend deux boîtes de collecte indépendantes, comprenant respectivement l'entrée de fluide et la sortie de fluide, qui sont disposées chacune d'un côté du plan longitudinal-transversal. On entend ici par indépendantes que les boîtes de collecte ne sont pas accolées l'une à l'autre, et qu'elles ne communiquent pas fluidiquement.

Dans ce premier mode de réalisation, la première extrémité des tubes, qui est celle qui est reliée au collecteur, comprend deux portions pliées qui correspondent chacune à l'un des ensembles de circulation de fluide. L'entaille, qui s'étend principalement longitudinalement à partir d'un bord de la première extrémité, permet une séparation de la première portion pliée et de la deuxième portion pliée d'un tube donné.

Du fait de la pliure des portions pliées, qui crée un angle au sein du tube, la connexion entre ce tube et le connecteur se fait en dehors du plan longitudinal-transversal, c'est-à-dire latéralement.

Selon une caractéristique optionnelle de l'invention, la première portion et la deuxième portion d'un même tube sont pliées à l'opposé l'une de l'autre par rapport au plan longitudinal-transversal.

Selon une caractéristique optionnelle de l'invention, la première portion du premier tube et la première portion du deuxième tube sont pliées d'un même côté du dispositif de régulation thermique, la deuxième portion du premier tube et la deuxième portion du deuxième tube étant pliées d'un autre côté opposé du dispositif de régulation thermique.

Selon une caractéristique optionnelle de l'invention, le collecteur comprend un premier cylindre comprenant l'entrée de fluide et un deuxième cylindre comprenant la sortie de fluide, les cylindres présentant des fentes d'insertion des portions pliées.

Le premier cylindre et le deuxième cylindre sont des éléments tubulaires, qui forment les boîtes de collecte indépendantes. Ces cylindres présentent des fentes d'insertion dimensionnées pour recevoir les portions pliées des premières extrémités des tubes, une étanchéité entre les fentes d'insertion et les portions pliées étant par exemple assurée par brasage.

Selon une caractéristique optionnelle de l'invention, une face du collecteur au voisinage d'une extrémité transversale, notamment de la deuxième extrémité transversale, du dispositif de régulation thermique comprend une plaque reliant le premier cylindre et le deuxième cylindre.

Au niveau de la deuxième extrémité transversale, qui est opposée à la première extrémité transversale porteuse des embouts de raccordement, le premier cylindre et le deuxième cylindre sont reliés par une plaque sensiblement plane qui a une fonction de rigidification. Cette plaque permet en outre de fermer les cylindres au niveau de la deuxième extrémité transversale, notamment par brasage de la plaque au contact des cylindres.

Selon une caractéristique optionnelle de l'invention, la plaque est porteuse d'au moins un plot de positionnement.

Ce plot permet de faciliter le positionnement du collecteur et a fortiori du dispositif de régulation thermique par exemple au sein d'un boîtier du pack-batterie.

Selon une caractéristique optionnelle de l'invention, le collecteur présente une première face de réception du premier tube et une deuxième face de réception du deuxième tube, opposée à la première face de réception, les tubes étant insérés dans le collecteur au droit des faces de réception.

Dans cette variante de l'invention qui couvre à la fois un deuxième mode de réalisation et un troisième mode de réalisation, le collecteur est une pièce pleine dans laquelle sont ménagées l'entrée de fluide et la sortie de fluide. Le collecteur présente une première face de réception dans laquelle s'insère perpendiculairement le premier tube, et une deuxième face de réception dans laquelle s'insère perpendiculairement le deuxième tube, les deux faces de réception étant sensiblement parallèles l'une à l'autre et perpendiculaires au plan longitudinal-transversal. La connexion entre le collecteur et les tubes se fait donc dans le plan longitudinal-transversal, ce qui permet de libérer de l'espace de part et d'autre du dispositif de régulation thermique et donc d'augmenter une surface disponible pour réguler la température des organes de stockage d'énergie électrique.

L'insertion des tubes au droit du connecteur permet de renforcer la tenue mécanique du dispositif de régulation thermique, en limitant les risques de déformation sous pression ou d'éclatement.

Selon une caractéristique optionnelle de l'invention, le collecteur est une boîte de collecte, l'entrée de fluide comprenant un premier conduit oblique ménagé dans la boîte de collecte et une chambre de distribution ménagée dans un prolongement des premiers ensembles de circulation, le premier conduit oblique débouchant dans la chambre de distribution, la sortie de fluide comprenant un deuxième conduit oblique ménagé dans la boîte de collecte et une chambre de collecte ménagée dans un prolongement des deuxièmes ensembles de circulation, le deuxième conduit oblique débouchant dans la chambre de collecte.

Il s'agit ici du deuxième mode de réalisation. La chambre de distribution est une chambre au sein de laquelle les canaux du premier ensemble de circulation se rejoignent, la chambre de collecte étant de la même façon une chambre au sein de laquelle les canaux du deuxième ensemble de circulation se rejoignent. Les conduits obliques permettent de relier ces chambres aux embouts de raccordement. La forme oblique des conduits facilite la fabrication du collecteur d'une part, et permet un meilleur écoulement du fluide d'autre part, notamment du fait de l'absence de coudes qui pourraient perturber cet écoulement.

Selon une caractéristique optionnelle de l'invention, le collecteur est une boîte de collecte, l'entrée de fluide comprenant un premier évidement ménagé en regard des premiers ensembles de circulation et la sortie de fluide comprenant un deuxième évidement ménagé en regard des deuxièmes ensembles de circulation, le premier évidement et le deuxième évidement étant séparés par une cloison de la boîte de collecte.

Ceci correspond au troisième mode de réalisation. Les évidements sont des espaces ménagés entre les faces de réception, des sections de ces évidements présentant une forme sensiblement rectangulaire. La cloison de la boîte de collecte permet de séparer physiquement les évidements de sorte que ceux-ci ne soient pas en communication fluidique, et ainsi que le fluide caloporteur amené par l'entrée de fluide et destiné à circuler dans le premier ensemble de circulation ne soit pas mélangé au fluide caloporteur ayant circulé dans le deuxième ensemble de circulation et destiné à être évacué par la sortie de fluide.

Selon une caractéristique optionnelle de l'invention, le premier évidement débouche sur la première extrémité transversale et le deuxième évidement débouche sur la première extrémité transversale, notamment via un conduit droit.

Il existe, du fait du positionnement des ensembles de circulation qui sont superposés l'un à l'autre, un décalage transversal entre le premier évidement et le deuxième évidement. L'embout de raccordement de l'entrée de fluide s'abouche ainsi directement dans le premier évidement, tandis que l'embout de raccordement de la sortie de fluide est relié au deuxième évidement par le biais d'un conduit droit. Il existe en outre un décalage latéral entre le premier évidement et le deuxième évidement, de sorte que le premier évidement soit en regard des canaux du premier ensemble de circulation sans gêner la circulation dans le deuxième évidement, et inversement.

L'invention concerne en outre un système de régulation thermique pour véhicule automobile, comprenant une pluralité de dispositifs de régulation thermique tel que décrit précédemment et une pluralité d'organes de stockage d'énergie électrique, les dispositifs de régulation thermique étant disposés le long des organes de stockage d'énergie électrique, le système de régulation thermique comprenant une nourrice de distribution raccordée aux collecteurs des dispositifs de régulation thermique.

Les dispositifs de régulation thermique sont disposés entre des rangées d'organes de stockage d'énergie électrique, au contact de ceux-ci. Les collecteurs de chacun des dispositifs de régulation thermique sont reliés à un circuit de fluide du système de régulation thermique par le biais d'une nourrice de distribution ; on comprend que cette nourrice de distribution est raccordée à chaque embout de raccordement des dispositifs de régulation thermique. La nourrice de distribution est par exemple intégrée au boîtier du pack-batterie.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig. 1] illustre, schématiquement, un dispositif de régulation thermique selon l'invention, des sens de circulation d'un fluide caloporteur étant représentés par des flèches ;
[Fig. 2] illustre, schématiquement, un premier mode de réalisation du dispositif de régulation thermique de la figure 1, des tubes de ce dispositif de régulation thermique présentant des portions pliées qui s'insèrent dans un collecteur représenté en transparence ;
[Fig. 3] illustre, schématiquement, un deuxième mode de réalisation du dispositif de régulation thermique selon l'invention, le collecteur de ce deuxième mode de réalisation étant vu en coupe ;
[Fig. 4] illustre, schématiquement, un troisième mode de réalisation du dispositif de régulation thermique 1, le collecteur de ce troisième mode de réalisation étant représenté selon une vue en coupe.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

Dans la description détaillée qui va suivre, les dénominations « longitudinale », « transversale » et « verticale » se réfèrent à l'orientation du dispositif de régulation thermique selon l'invention. Une direction longitudinale correspond à une direction d'extension principale du dispositif de régulation thermique, cette direction longitudinale étant parallèle à un axe longitudinal L d'un repère L, V, T illustré sur les figures. Une direction transversale correspond à une direction d'extension principale du collecteur du dispositif de régulation thermique, cette direction transversale étant parallèle à un axe transversal T du repère L, V, T et cet axe transversal T étant perpendiculaire à l'axe longitudinal L. Enfin, une direction verticale correspond à une direction parallèle à un axe vertical V du repère L, V, T, cet axe vertical V étant perpendiculaire à l'axe longitudinal L et à l'axe transversal T.

En outre, dans la présente description le terme « fluide caloporteur » peut se rapporter à tout fluide de refroidissement, réfrigérant, de régulation thermique, diélectrique ou diphasique, dès lors que ce fluide, liquide ou gazeux, a pour effet de refroidir ou de réchauffer des organes de stockage d'énergie électrique.

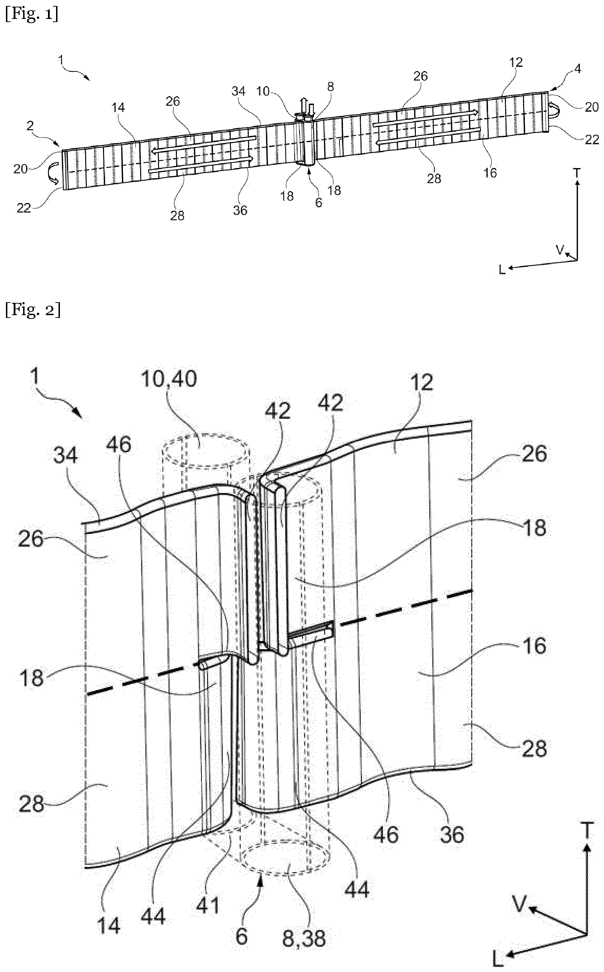

Les figures 1 à 4 illustrent ainsi, schématiquement, un dispositif de régulation thermique 1 selon l'invention. Ce dispositif de régulation thermique 1 a vocation à équiper un véhicule automobile, notamment un véhicule hybride ou électrique, afin de refroidir et/ou de réchauffer des organes de stockage d'énergie électrique. De tels organes de stockage d'énergie électrique, qui sont dans le cadre de l'invention des cellules cylindriques, permettent une alimentation électrique des différents éléments du véhicule automobile. Le dispositif de régulation thermique 1 est conçu pour la circulation d'un fluide caloporteur, ce fluide caloporteur échangeant des calories avec les organes de stockage d'énergie électrique pour réguler leur température.

Le dispositif de régulation thermique 1 s'étend principalement dans un plan longitudinal-transversal, entre une première extrémité longitudinale 2 et une deuxième extrémité longitudinale 4. Entre ces deux extrémités longitudinales 2, 4, le dispositif de régulation thermique 1 comprend un collecteur 6. Ce collecteur 6 permet d'acheminer le fluide caloporteur jusqu'au dispositif de régulation thermique 1 et de l'en évacuer ; le collecteur 6 présente à cet effet une entrée de fluide 8 et une sortie de fluide 10.

Le collecteur 6 est plus précisément disposé en une portion centrale du dispositif de régulation thermique 1 par rapport à ses extrémités longitudinales 2, 4. On comprend que le collecteur 6 est disposé à distance des extrémités longitudinales 2, 4. Tel qu'illustré, le collecteur 6 est ici sensiblement à équidistance de la première extrémité longitudinale 2 et de la deuxième extrémité longitudinale 4.

Entre le collecteur 6 et la première extrémité longitudinale 2 se trouve un premier tube 12, et entre le collecteur 6 et la deuxième extrémité longitudinale 4 se trouve un deuxième tube 14. Chacun de ces tubes 12, 14 est un tube corrugué, par exemple réalisé en un matériau métallique, dont une section selon un plan longitudinal-vertical présente une forme sinusoïdale. Une telle forme sinusoïdale est complémentaire de la forme cylindrique des organes de stockage d'énergie électrique disposés en rangées, les tubes 12, 14 étant configurés pour être plaqués contre ces organes de stockage d'énergie électrique. Le dispositif de régulation thermique 1 est ainsi placé au sein d'une pluralité d'organes de stockage d'énergie de sorte qu'au moins une face latérale 16 des tubes 12, 14, soit au contact de ces organes de stockage d'énergie électrique. Le dispositif de régulation thermique 1 peut avantageusement être placé entre deux rangées successives d'organes de stockage d'énergie électrique, de sorte que les deux faces latérales 16 des tubes 12, 14 soient au contact des organes de stockage d'énergie électrique.

Le premier tube 12 et le deuxième tube 14 sont configurés pour la circulation du fluide caloporteur, qui circule au sein de chacun de ces tubes 12, 14 entre une première extrémité 18 et une deuxième extrémité 20, ces extrémités 18, 20 étant opposées selon la direction longitudinale L. La première extrémité 18 de chacun des tubes 12, 14 est reliée au collecteur 6 et s'insère dans celui-ci. La deuxième extrémité 20 des tubes 12, 14, qui est au voisinage de la première extrémité longitudinale 2 du dispositif de régulation thermique 1 pour le premier tube 12 et au voisinage de la deuxième extrémité longitudinale 4 pour le deuxième tube 14, s'insère dans une boîte de renvoi 22. On comprend ainsi qu'il existe deux boîtes de renvoi 22, soit une à chacune des extrémités longitudinales 2, 4 du dispositif de régulation thermique 1. Ces boîtes de renvoi 22 sont visibles à la figure 1. Les tubes 12, 14 sont solidarisés par brasage au collecteur 6 d'une part et à l'une des boîtes de renvoi 22 d'autre part afin d'éviter les fuites de fluide caloporteur.

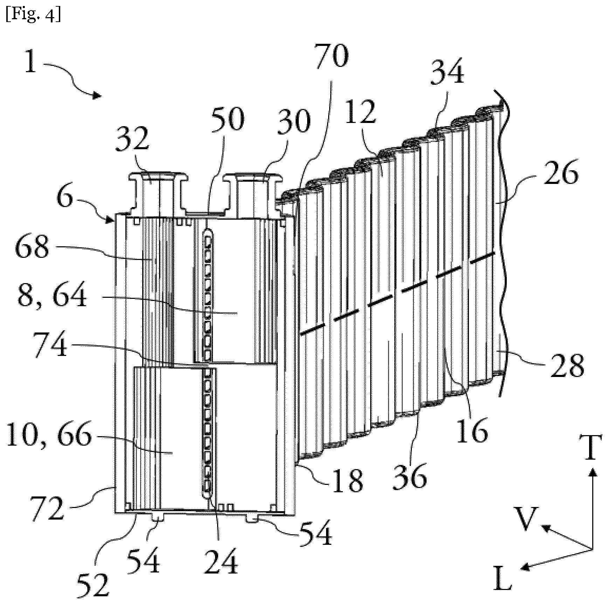

Chacun des tubes 12, 14 présente une pluralité de canaux 24, qui sont particulièrement visibles en figure 4. Ces canaux 24 sont des conduits de circulation pour le fluide caloporteur qui s'étendent de la première extrémité 18 à la deuxième extrémité 20. Les canaux 24 sont ménagés dans chacun des tubes 12, 14 entre leurs deux faces latérales 16, et ils sont disposés les uns au-dessus des autres selon la direction transversale T. Les canaux 24 sont sensiblement parallèles les uns aux autres.

Les canaux 24 sont répartis en deux ensembles de circulation 26, 28, parmi lesquels un premier ensemble de circulation 26 et un deuxième ensemble de circulation 28. Une telle distinction entre le premier ensemble de circulation 26 et le deuxième ensemble de circulation 28 est illustré sur les figures sous la forme de tirets délimitant les tubes 12, 14 en deux portions sensiblement égales le long de la direction longitudinale L. Une distance entre deux canaux 24 adjacents du premier ensemble de circulation 26 ou deux canaux 24 adjacents du deuxième ensemble de circulation 28 est comprise entre 1,9 et 2,1 millimètres, tandis qu'une distance entre le canal 24 du premier ensemble de circulation 26 adjacent au canal 24 du deuxième ensemble de circulation 28 est comprise entre 2,9 et 3,1 millimètres, ces distances étant mesurées le long de la direction transversale T. Avantageusement, une distance entre deux canaux 24 adjacents du premier ensemble de circulation 26 ou deux canaux 24 adjacents du deuxième ensemble de circulation 28 est de 2 millimètres, tandis qu'une distance entre le canal 24 du premier ensemble de circulation 26 adjacent au canal 24 du deuxième ensemble de circulation 28 est de 3 millimètres, ces mesures s'entendant aux tolérances de fabrication près.

La répartition des canaux 24 en deux ensembles de circulation 26, 28 permet une régulation thermique optimisée au sein du dispositif de régulation thermique 1. Le fluide caloporteur circule ainsi depuis l'entrée de fluide 8 du collecteur 6 jusqu'aux boîtes de renvoi 22 *via* les premiers ensembles de circulation 26 de chacun du premier tube 12 et du deuxième tube 14, et des boîtes de renvoi 22 jusqu'à la sortie de fluide 10 *via* les deuxièmes ensembles de circulation 28 de ce premier tube 12 et de ce deuxième tube 14. En d'autres termes, le premier ensemble de circulation 26 de chacun des tubes 12, 14 débouche dans l'entrée de fluide 8, et le deuxième ensemble de circulation 28 de chacun de ces tubes 12, 14 débouche dans la sortie de fluide 10.

Du fait de la position centrale du collecteur 6 au sein du dispositif de régulation thermique 1, on comprend que le fluide caloporteur circule selon un premier sens le long de la direction longitudinale L au sein du premier ensemble de circulation 26 du premier tube 12, selon un deuxième sens opposé au premier sens au sein du deuxième ensemble de circulation 28 de ce premier tube 12, selon le deuxième sens au sein du premier ensemble de circulation 26 du deuxième tube 14, et selon le premier sens au sein du deuxième ensemble de circulation 28 du deuxième tube 14. Le changement de sens du fluide caloporteur entre le premier ensemble de circulation 26 et le deuxième ensemble de circulation 28 de chacun des tubes 12, 14 est permis par la présence des boîtes de renvoi 22, qui relient fluidiquement ces ensembles de circulation 26, 28 et au sein desquelles le fluide caloporteur suit un circuit en forme de U.

Le collecteur 6, son agencement et sa coopération avec chacun du premier tube 12 et du deuxième tube 14 vont maintenant être décrits en détail.

Selon l'invention, l'entrée de fluide 8 du collecteur 6 et sa sortie de fluide 10 sont disposées sur des côtés opposés par rapport au plan longitudinal-transversal. L'entrée de fluide 8 est ainsi disposée d'un premier côté du plan longitudinal-transversal et la sortie de fluide 10 d'un deuxième côté de celui-ci. L'entrée de fluide 8 et la sortie de fluide 10 sont par ailleurs en regard l'une de l'autre par rapport au plan longitudinal-transversal, de sorte qu'une droite reliant l'entrée de fluide 8 à la sortie de fluide 10 au droit de celles-ci est sensiblement perpendiculaire au plan longitudinal-transversal.

L'acheminement de fluide caloporteur jusqu'au dispositif de régulation thermique 1 et son évacuation de celui-ci se font par l'intermédiaire du collecteur 6, et plus précisément via des embouts de raccordement 30, 32. Le collecteur 6 présente ainsi un premier embout de raccordement 30 de l'entrée de fluide 8 et un deuxième embout de raccordement 32 de la sortie de fluide 10, de tels embouts de raccordement 30, 32 étant visibles sur les figures 1, 3 et 4. Ces embouts de raccordement 30, 32 sont disposés dans un prolongement du collecteur 6, respectivement dans le prolongement de l'entrée de fluide 8 et de la sortie de fluide 10. Les embouts de raccordement 30, 32 sont ici tournés vers une première extrémité transversale 34 du dispositif de régulation thermique 1, qui est opposée à une deuxième extrémité transversale 36 selon la direction transversale T. On entend par « tournés vers une première extrémité transversale 34 » que les embouts de raccordement 30, 32 sont portés par une portion ou une face du collecteur 6 au voisinage de la première extrémité transversale 34, de façon qu'un raccordement du dispositif de régulation thermique 1 à des arrivées et sorties de fluide s'effectue par cette première extrémité transversale 34. Le premier embout de raccordement 30 et le deuxième embout de raccordement 32 sont dans l'exemple illustré tous deux disposés à une même hauteur, c'est-à-dire à une même distance de la première extrémité transversale 34, de sorte à faciliter l'acheminement et l'évacuation du fluide caloporteur.

Lorsque le dispositif de régulation thermique 1 est intégré à un système de régulation thermique, par exemple au sein d'un boîtier d'un module de batterie du véhicule automobile comprenant une pluralité de dispositifs de régulation thermique 1 selon l'invention, une telle disposition des embouts de raccordement 30, 32 permet de raccorder les collecteurs 6 de chacun des dispositifs de régulation thermique 1 à un circuit de fluide par l'intermédiaire d'une nourrice de distribution, notamment une nourrice de distribution disposée dans le boîtier du module de batterie.

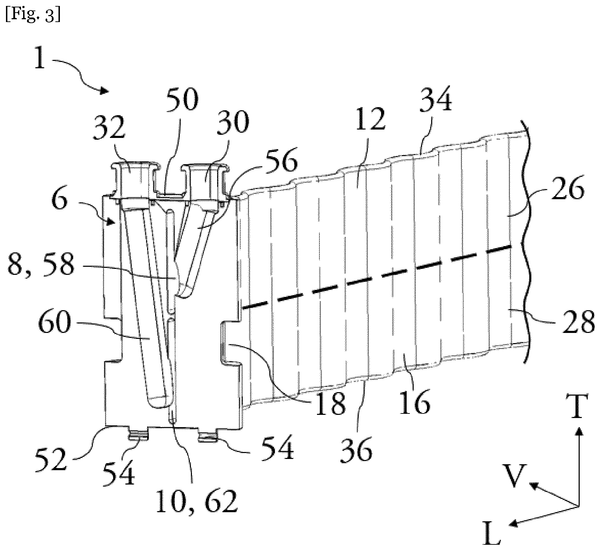

Le dispositif de régulation thermique 1 est représenté selon un premier mode de réalisation à la figure 2, selon un deuxième mode de réalisation à la figure 3, et selon un troisième mode de réalisation à la figure 4 ; ces modes de réalisation vont maintenant être décrits successivement en relation avec les figures correspondantes.

Dans le premier mode de réalisation, illustré en figure 2, le collecteur 6 comprend deux boîtes de collecte indépendantes, qui prennent la forme d'un premier cylindre 38 et d'un deuxième cylindre 40. Ces cylindres 38, 40 sont ici représentés en transparence. Le premier cylindre 38 comprend l'entrée de fluide 8 tandis que le deuxième cylindre 40 comprend la sortie de fluide 10. Le premier cylindre 38 et le deuxième cylindre 40 s'étendent chacun principalement selon la direction transversale T, de part et d'autre du plan longitudinal-transversal. Au niveau de la deuxième extrémité transversale 36 du dispositif de régulation thermique 1, le premier cylindre 38 et le deuxième cylindre 40 sont reliés l'un à l'autre par l'intermédiaire d'une plaque 41. Cette plaque 41, qui correspond à une face du collecteur 6 en regard de cette deuxième extrémité transversale 36, assure notamment une fonction de rigidification du collecteur 6. La plaque 41 peut être porteuse d'au moins un plot de positionnement, de préférence de deux plots de positionnements, non représentés sur la figure 1 et qui ont pour but de faciliter un positionnement du dispositif de régulation thermique 1 au sein du boîtier du module de batterie.

Dans ce premier mode de réalisation, afin d'assurer une liaison fluidique entre les tubes 12, 14 et les cylindres 38, 40 du collecteur 6, ces tubes 12, 14 présentent au niveau de leurs premières extrémités 18 respectives des portions pliées 42, 44. Chacun du premier tube 12 et du deuxième tube 14 présente en effet une première portion pliée 42 et une deuxième portion 44, la première portion pliée 42 s'étendant du côté de la première extrémité transversale 34 et la deuxième portion pliée 44 s'étendant du côté de la deuxième extrémité transversale 36. On entend ici par « portions pliées » que les tubes 12, 14 sont courbés, à leurs premières extrémités 18, de façon à présenter une courbure de rayon plus petite qu'un rayon de courbure de la section sinusoïdale des tubes 12, 14. Par exemple et tel qu'illustré, les portions pliées 42, 44 peuvent présenter une première partie sensiblement dans le plan longitudinal-transversal, et une deuxième partie sensiblement perpendiculaire à cette première partie.

Les portions pliées 42, 44 sont disposées dans le prolongement des ensembles de circulation 26, 28, avec la première portion pliée 42 disposée dans le prolongement du premier ensemble de circulation 26 et reliée fluidiquement à celui-ci, et la deuxième portion pliée 44 disposée dans le prolongement du deuxième ensemble de circulation 28 et reliée fluidiquement à ce dernier. Les portions pliées 42, 44 correspondent à des portions des tubes 12, 14 formées d'un seul canal en communication avec chacun des canaux 24 de l'ensemble de circulation 26, 28 correspondant, le fluide caloporteur circulant de façon uniforme au sein de ces portions pliées 42, 44.

À la première extrémité 18 des tubes 12, 14, la première portion pliée 42 et la deuxième portion pliée 44 d'un même tube 12, 14 sont séparées l'une de l'autre par une entaille 46 ménagée dans le tube 12, 14. Cette entaille 46 s'étend à partir d'un bord de la première extrémité 18, en direction de la boîte de renvoi 22, selon une direction sensiblement parallèle à la direction longitudinale L. L'entaille 46 s'étend par exemple longitudinalement jusqu'aux canaux 24, entre les canaux 24 du premier ensemble de circulation 26 et les canaux 24 du deuxième ensemble de circulation 28. L'extension de l'entaille 46 entre les ensembles de circulation 26, 28 est facilitée par la plus grande distance entre les deux canaux 24 adjacents du premier ensemble de circulation 26 et du deuxième ensemble de circulation 28 par rapport aux distances entre deux canaux 24 adjacents du premier ensemble de circulation 26 ou du deuxième ensemble de circulation 28, tel que cela a été évoqué précédemment.

Comme cela est visible à la figure 1, la première portion pliée 42 et la deuxième portion pliée 44 d'un tube 12, 14 donné sont pliées à l'opposé l'une de l'autre par rapport au plan longitudinal-transversal, la première portion pliée 42 étant recourbée d'un côté de ce plan et la deuxième portion pliée 44 étant recourbée de l'autre côté. Afin qu'à la fois la première portion pliée 42 du premier tube 12 et la première portion pliée 42 du deuxième tube 14 soient reliées fluidiquement à l'entrée de fluide 8, ces deux premières portions pliées 42 sont pliées d'un même côté du dispositif de régulation thermique 1, à savoir celui qui comprend le premier cylindre 38. De la même façon, la deuxième portion pliée 44 du premier tube 12 et la deuxième portion pliée 44 du deuxième tube 14 sont pliées de l'autre côté du dispositif de régulation thermique 1, qui comprend le deuxième cylindre 40.

En vue de la réception des portions pliées 42, 44, chacun des cylindres 38, 40 présente une fente d'insertion 48. Cette fente d'insertion 48 est traversante, de sorte qu'elle s'étend d'une face interne d'un cylindre 38, 40 à une face externe de celui-ci. Afin d'éviter les fuites de fluide caloporteur, les portions pliées 42, 48 débouchent dans la lumière des cylindres 38, 40 en s'étendant au-delà de leurs faces internes.

À l'inverse du premier mode de réalisation, les deuxième et troisième modes de réalisation du dispositif de régulation thermique 1 illustrés respectivement aux figures 3 et 4 comprennent un collecteur 6 sous la forme d'une boîte de collecte unique, ce collecteur 6 présentant une section selon un plan latéral-transversal de forme sensiblement rectangulaire.

Dans ces deux modes de réalisation, le collecteur 6 est délimité longitudinalement par une première face de réception du premier tube 12 d'une part et par une deuxième face de réception du deuxième tube 14 d'autre part, ces deux faces de réception étant opposées l'une à l'autre selon la direction longitudinale L. Les faces de réception sont sensiblement perpendiculaires au plan longitudinal-transversal et les tubes 12, 14 s'insèrent dans le collecteur 6 au droit de ces faces de réception, la première extrémité 18 du premier tube 12 s'insérant à travers la première face de réception et la première extrémité 18 du deuxième tube 14 s'insérant à travers la deuxième face de réception. Le premier tube 12 et le deuxième tube 14 sont reçus par le collecteur 6 en regard l'un de l'autre ; autrement dit, le premier tube 12 s'insère dans le collecteur 6 en face du deuxième tube 14.

Les deux faces de réception sont jointes l'une à l'autre par l'intermédiaire à la fois d'une face supérieure 50 en regard de la première extrémité transversale 34 du dispositif de régulation thermique 1 et d'une face inférieure 52 en regard de la deuxième extrémité transversale 36 du dispositif de régulation thermique 1, ces faces supérieure 50 et inférieure 52 étant sensiblement parallèles l'une par rapport à l'autre. La face supérieure 50 reçoit le premier embout de raccordement 30 de l'entrée de fluide 8 et le deuxième embout de raccordement 32 de la sortie de fluide 10. La face inférieure 52 est quant à elle porteuse d'au moins un plot de positionnement 54, ici de deux plots de positionnement 54 disposés dans un alignement transversal avec respectivement le premier embout de raccordement 30 et le deuxième embout de raccordement 32.

Tel que cela est illustré à la figure 3, dans le deuxième mode de réalisation, l'entrée de fluide 8 du collecteur 6 comprend un premier conduit oblique 56, qui s'étend à partir du premier embout de raccordement 30 jusqu'à une chambre de distribution 58 ménagée dans un prolongement des premiers ensembles de circulation 26 du premier tube 12 et du deuxième tube 14. Similairement, la sortie de fluide 10 comprend un deuxième conduit oblique 60 s'étendant du deuxième embout de raccordement 32 jusqu'à une chambre de collecte 62 ménagée dans le collecter 60 dans un prolongement des deuxièmes ensembles de circulation 28 des tubes 12, 14. En d'autres termes, le premier conduit oblique 56 s'abouche au premier embout de raccordement 30 et débouche dans la chambre de distribution 58, tandis que le deuxième conduit oblique 60 s'abouche au deuxième embout de raccordement 32 et débouche dans la chambre de collecte 62. La chambre de distribution 58 et la chambre de collecte 62 sont des encoches allongées transversalement, de section ovale, en regard respectivement des canaux 24 des premiers ensembles de circulation 26 des tubes 12, 14 et des canaux 24 de leurs deuxièmes ensembles de circulation 28. Les chambres de distribution 58 et de collecte 62 sont elles-mêmes dépourvues de canaux 24.

Le premier conduit oblique 56 de l'entrée de fluide 6 présente une dimension d'allongement, mesurée entre le premier embout de raccordement 30 et la chambre de distribution 58, différente d'une dimension d'allongement du deuxième conduit oblique 60 de la sortie de fluide 10 mesurée entre le deuxième embout de raccordement 32 et la chambre de collecte 62. Plus précisément, le premier conduit oblique 56 présente une dimension d'allongement inférieure à la dimension d'allongement du deuxième conduit oblique 60.

Dans le troisième mode de réalisation, représenté en figure 4, l'entrée de fluide 8 du collecteur 6 comprend un premier évidement 64 ménagé en regard des premiers ensembles de circulation 26 des tubes 12, 14, le premier embout de raccordement 30 s'abouchant sur ce premier évidement 64. La sortie de fluide 10 comprend un deuxième évidement 66 ménagé en regard des deuxièmes ensembles de circulation 28 des tubes 12, 14, ce deuxième évidement 66 étant reliée fluidiquement au deuxième embout de raccordement 32 par le biais d'un conduit droit 68 s'étendant principalement transversalement. En d'autres termes, la sortie de fluide 10 comprend un conduit droit 68 débouchant dans le deuxième évidement 66. Le premier évidement 64 et le deuxième évidement 66 débouchent donc tous deux sur la première extrémité transversale 34, le premier évidement 64 directement et le deuxième évidement 66 *via* le conduit droit 68. En raison de la présence du conduit droit 68, il existe un décalage transversal entre le premier évidement 64 et le deuxième évidement 66.

Les évidements 64, 66 présentent des sections, selon un plan latéral-transversal, de formes sensiblement rectangulaires. Ces évidements 64, 66 s'étendent chacun sur plus d'une moitié du collecteur 6 selon la direction latérale L. Ainsi, le premier évidement 64 s'étend à partir d'un premier bord latéral 70 reliant les deux faces de réception du collecteur 6 d'un côté du plan longitudinal-transversal jusqu'aux canaux 24 des premiers ensembles de circulation 26. De la même façon, le deuxième évidement 66 s'étend à partir d'un deuxième bord latéral 72 reliant les deux faces de réception du 6 de l'autre côté du plan longitudinal-transversal jusqu'aux canaux 24 des deuxièmes ensembles de circulation 28. On comprend de ce fait qu'il existe un décalage latéral entre le premier évidement 64 et le deuxième évidement 66.

Le premier évidement 64 et le deuxième évidement 66 sont séparés, selon la direction transversale T, par une cloison 74. Cette cloison 74 est disposée sensiblement à équidistance de la face supérieure 50 et de la face inférieure 52 du collecteur 6, et elle s'étend parallèlement à celles-ci. Cette cloison 74 est plus particulièrement disposée entre le canal 24 du premier ensemble de circulation 26 et le canal 24 du deuxième ensemble de circulation 28 qui lui est directement adjacent, une telle disposition étant facilitée par la distance augmentée entre ces deux canaux 24 tel que cela a été mentionné ci-avant. La cloison 74 assure l'étanchéité des évidements 64, 66 l'un par rapport à l'autre.

La présente invention propose ainsi un dispositif de régulation thermique au sein duquel le positionnement central du collecteur permet une circulation optimisée du fluide caloporteur. Cela a pour effet une homogénéité de températures de part et d'autre du collecteur, de sorte que les organes de stockage d'énergie électrique dont le dispositif de régulation thermique est destiné à réguler la température soient refroidies et/ou réchauffées de façon optimale.

Dans un mode de réalisation alternatif, l'embout de raccordement (30) de l'entrée de fluide (8) et l'embout de raccordement (32) de la sortie de fluide (10) du collecteur (6) sont chacun formés de deux coquilles pouvant être assemblées ensemble, notamment par clipsage, afin de former lesdits embouts. Dans un mode de réalisation alternatif, lesdits embouts peuvent être formée de deux demi-coquilles et d'une entretoise formant l'extrémité de l'embout, ladite entretoise étant maintenue par l'assemblage des deux embouts.

## Revendications

1. Dispositif de régulation thermique (1) d'organes de stockage d'énergie électrique s'étendant principalement dans un plan longitudinal-transversal entre une première extrémité longitudinale (2) et une deuxième extrémité longitudinale (4), chacune de ces extrémités longitudinales (2, 4) étant équipée d'une boîte de renvoi (22), le dispositif de régulation thermique (1) comprenant un premier tube (12), un deuxième tube (14) et un collecteur (6), chacun des tubes (12, 14) présentant une première extrémité (18) reliée au collecteur (6) et une deuxième extrémité (20) reliée à l'une des boîtes de renvoi (22), les tubes (12, 14) comprenant chacun une pluralité de canaux (24) configurés pour la circulation d'un fluide caloporteur répartis en au moins un premier ensemble de circulation (26) et un deuxième ensemble de circulation (28) superposés l'un à l'autre selon une direction transversale (T), le dispositif de régulation thermique étant **caractérisé en ce que** le collecteur (6) comprend une entrée de fluide caloporteur (8) et une sortie de fluide caloporteur (10), l'entrée de fluide (8) étant disposée d'un premier côté du plan longitudinal-transversal et la sortie de fluide (10) étant disposée d'un deuxième côté, opposé au premier, du plan longitudinal-transversal, le premier ensemble de circulation (26) de chacun des tubes (12, 14) débouchant dans l'entrée de fluide (8) et le deuxième ensemble de circulation (28) de chacun des tubes (12, 14) débouchant dans la sortie de fluide (10), le dispositif comprenant une première extrémité transversale (34) et une deuxième extrémité transversale (36) opposée à la première extrémité transversale (34), un embout de raccordement (30) de l'entrée de fluide (8) et un embout de raccordement (32) de la sortie de fluide (10) du collecteur (6) étant tournés vers la première extrémité transversale (34).

2. Dispositif de régulation thermique (1) selon la revendication précédente, dans lequel les embouts (30, 32) sont disposés dans un prolongement du collecteur (6), au voisinage de la première extrémité transversale (34) du dispositif de régulation thermique (1).

3. Dispositif de régulation thermique (1) selon l'une quelconque des revendications précédentes, dans lequel le collecteur (6) est brasé sur les tubes (12, 14).

4. Dispositif de régulation thermique (1) selon l'une quelconque des revendications précédentes, dans lequel chaque boîte de renvoi (22) relie fluidiquement le premier ensemble de circulation (26) et le deuxième ensemble de circulation (28) d'un tube (12, 14).

5. Dispositif de régulation thermique (1) selon l'une quelconque des revendications précédentes, dans lequel la première extrémité (18) des tubes (12, 14) comprend une première portion pliée (42) reliée fluidiquement au premier ensemble de circulation (26) et une deuxième portion pliée (44) reliée fluidiquement au deuxième ensemble de circulation (28), les portions pliées (42, 44) étant séparées l'une de l'autre par une entaille (46) formée dans le tube (12, 14), les portions pliées (42, 44)débouchant dans le collecteur (6).

6. Dispositif de régulation thermique (1) selon la revendication précédente, dans lequel la première portion (42) et la deuxième portion (44) d'un même tube (12, 14) sont pliées à l'opposé l'une de l'autre par rapport au plan longitudinal-transversal.

7. Dispositif de régulation thermique (1) selon la revendication précédente, dans lequel la première portion (42) du premier tube (12) et la première portion (42) du deuxième tube (14) sont pliées d'un même côté du dispositif de régulation thermique (1), la deuxième portion (44) du premier tube (12) et la deuxième portion (44) du deuxième tube (14) étant pliées d'un autre côté opposé du dispositif de régulation thermique (1).

8. Dispositif de régulation thermique (1) selon l'une quelconque des revendications précédentes, dans lequel le collecteur (6) comprend un premier cylindre (38) comprenant l'entrée de fluide (8) et un deuxième cylindre (40) comprenant la sortie de fluide (10), les cylindres (38, 40) présentant des fentes d'insertion (48) des portions pliées (42, 44).

9. Dispositif de régulation thermique (1) selon l'une quelconque des revendications précédentes, dans lequel une face du collecteur (6) au voisinage d'une extrémité transversale (34, 36), notamment de la deuxième extrémité transversale (36), du dispositif de régulation thermique (1) comprend une plaque (41) reliant le premier cylindre (38) et le deuxième cylindre (40).

10. Dispositif de régulation thermique (1) selon l'une quelconque des revendications 1 à 4, dans lequel le collecteur (6) présente une première face de réception du premier tube (12) et une deuxième face de réception du deuxième tube (14), opposée à la première face de réception, les tubes (12, 14) étant insérés dans le collecteur (6) au droit des faces de réception.

11. Dispositif de régulation thermique (1) selon l'une quelconque des revendications 1 à 4 et 10, dans lequel le collecteur (6) est une boîte de collecte, l'entrée de fluide (8) comprenant un premier conduit oblique (56) ménagé dans la boîte de collecte et une chambre de distribution (58) ménagée dans un prolongement des premiers ensembles de circulation (26), le premier conduit oblique (56) débouchant dans la chambre de distribution (58), la sortie de fluide (10) comprenant un deuxième conduit oblique (60) ménagé dans la boîte de collecte et une chambre de collecte (62) ménagée dans un prolongement des deuxièmes ensembles de circulation (28), le deuxième conduit oblique (60) débouchant dans la chambre de collecte (62).

12. Dispositif de régulation thermique (1) selon l'une quelconque des revendications 1 à 4 et 10, dans lequel le collecteur (6) est une boîte de collecte, l'entrée de fluide (8) comprenant un premier évidement (64) ménagé en regard des premiers ensembles de circulation (26) et la sortie de fluide (10) comprenant un deuxième évidement (66) ménagé en regard des deuxièmes ensembles de circulation (28), le premier évidement (64) et le deuxième évidement (66) étant séparés par une cloison (74) de la boîte de collecte.

13. Dispositif de régulation thermique (1) selon la revendication précédente, dans lequel le premier évidement (64) débouche sur la première extrémité transversale (34) et le deuxième évidement (66) débouche sur la première extrémité transversale (34), notamment via un conduit droit (68).

14. Système de régulation thermique pour véhicule automobile, comprenant une pluralité de dispositifs de régulation thermique (1) selon l'une quelconque des revendications précédentes et une pluralité d'organes de stockage d'énergie électrique, les dispositifs de régulation thermique (1) étant disposés le long des organes de stockage d'énergie électrique, le système de régulation thermique comprenant une nourrice de distribution raccordée aux collecteurs (6) des dispositifs de régulation thermique (1).

## Patentansprüche

1. Vorrichtung zur thermischen Regulierung (1) von Speicherorganen für elektrische Energie, die sich hauptsächlich in einer Längs-Quer-Ebene zwischen einem ersten Längsende (2) und einem zweiten Längsende (4) erstrecken, wobei jedes dieser Längsenden (2, 4) mit einem Umlenkkasten (22) ausgestattet ist, wobei die Vorrichtung zur thermischen Regulierung (1) ein erstes Rohr (12), ein zweites Rohr (14) und einen Verteiler (6) umfasst, wobei jedes der Rohre (12, 14) ein erstes Ende (18), das mit dem Verteiler (6) verbunden ist, und ein zweites Ende (20), das mit einem der Umlenkkästen (22) verbunden ist, aufweist, wobei die Rohre (12, 14) jeweils eine Vielzahl von Kanälen (24) umfassen, die für die Zirkulation eines Wärmeträgerfluids konfiguriert sind und auf mindestens eine erste Zirkulationsgruppe (26) und eine zweite Zirkulationsgruppe (28) verteilt sind, die in einer Querrichtung (T) übereinander angeordnet sind, wobei die Vorrichtung zur thermischen Regulierung **dadurch gekennzeichnet ist, dass** der Verteiler (6) einen Wärmeträgerfluid-Einlass (8) und einen Wärmeträgerfluid-Auslass (10) umfasst, wobei der Fluideinlass (8) auf einer ersten Seite der Längs-Quer-Ebene angeordnet ist und der Fluidauslass (10) auf einer zweiten Seite, die der ersten Seite gegenüberliegt, der Längs-Quer-Ebene angeordnet ist, wobei die erste Zirkulationsgruppe (26) jedes der Rohre (12, 14) in den Fluideinlass (8) mündet und die zweite Zirkulationsgruppe (28) jedes der Rohre (12, 14) in den Fluidauslass (10) mündet, wobei die Vorrichtung ein erstes Querende (34) und ein zweites Querende (36), das dem ersten Querende (34) gegenüberliegt, umfasst, wobei ein Anschlussstutzen (30) des Fluideinlasses (8) und ein Anschlussstutzen (32) des Fluidauslasses (10) des Verteilers (6) zum ersten Querende (34) hin ausgerichtet sind.

2. Vorrichtung zur thermischen Regulierung (1) nach dem vorhergehenden Anspruch, bei der die Stutzen (30, 32) in einer Verlängerung des Verteilers (6) in der Nähe des ersten Querendes (34) der Vorrichtung zur thermischen Regulierung (1) angeordnet sind.

3. Vorrichtung zur thermischen Regulierung (1) nach einem der vorhergehenden Ansprüche, bei der der Verteiler (6) auf die Rohre (12, 14) gelötet ist.

4. Vorrichtung zur thermischen Regulierung (1) nach einem der vorhergehenden Ansprüche, bei der jeder Umlenkkasten (22) die erste Zirkulationsgruppe (26) und die zweite Zirkulationsgruppe (28) eines Rohres (12, 14) fluidisch miteinander verbindet.

5. Vorrichtung zur thermischen Regulierung (1) nach einem der vorhergehenden Ansprüche, bei der das erste Ende (18) der Rohre (12, 14) einen ersten gebogenen Abschnitt (42), der fluidisch mit der ersten Zirkulationsgruppe (26) verbunden ist, und einen zweiten gebogenen Abschnitt (44), der fluidisch mit der zweiten Zirkulationsgruppe (28) verbunden ist, umfasst, wobei die gebogenen Abschnitte (42, 44) durch einen im Rohr (12, 14) ausgebildeten Einschnitt (46) voneinander getrennt sind und die gebogenen Abschnitte (42, 44) in den Verteiler (6) münden.

6. Vorrichtung zur thermischen Regulierung (1) nach dem vorhergehenden Anspruch, bei der der erste Abschnitt (42) und der zweite Abschnitt (44) eines gleichen Rohres (12, 14) in entgegengesetzte Richtungen bezüglich der Längs-Quer-Ebene gebogen sind.

7. Vorrichtung zur thermischen Regulierung (1) nach dem vorhergehenden Anspruch, bei der der erste Abschnitt (42) des ersten Rohres (12) und der erste Abschnitt (42) des zweiten Rohres (14) zur gleichen Seite der Vorrichtung zur thermischen Regulierung (1) hin gebogen sind, wobei der zweite Abschnitt (44) des ersten Rohres (12) und der zweite Abschnitt (44) des zweiten Rohres (14) zur entgegengesetzten anderen Seite der Vorrichtung zur thermischen Regulierung (1) hin gebogen sind.

8. Vorrichtung zur thermischen Regulierung (1) nach einem der vorhergehenden Ansprüche, bei der der Verteiler (6) einen ersten Zylinder (38), der den Fluideinlass (8) umfasst, und einen zweiten Zylinder (40), der den Fluidauslass (10) umfasst, aufweist, wobei die Zylinder (38, 40) Einführungsschlitze (48) für die gebogenen Abschnitte (42, 44) aufweisen.

9. Vorrichtung zur thermischen Regulierung (1) nach einem der vorhergehenden Ansprüche, bei der eine Fläche des Verteilers (6) in der Nähe eines Querendes (34, 36), insbesondere des zweiten Querendes (36), der Vorrichtung zur thermischen Regulierung (1) eine Platte (41) umfasst, die den ersten Zylinder (38) und den zweiten Zylinder (40) miteinander verbindet.

10. Vorrichtung zur thermischen Regulierung (1) nach einem der Ansprüche 1 bis 4, bei der der Verteiler (6) eine erste Aufnahmefläche für das erste Rohr (12) und eine zweite Aufnahmefläche für das zweite Rohr (14), die der ersten Aufnahmefläche gegenüberliegt, aufweist, wobei die Rohre (12, 14) im Bereich der Aufnahmeflächen in den Verteiler (6) eingeführt sind.

11. Vorrichtung zur thermischen Regulierung (1) nach einem der Ansprüche 1 bis 4 und 10, bei der der Verteiler (6) ein Sammelkasten ist, wobei der Fluideinlass (8) einen ersten schrägen Kanal (56), der im Sammelkasten ausgebildet ist, und eine Verteilerkammer (58), die in einer Verlängerung der ersten Zirkulationsgruppen (26) ausgebildet ist, umfasst, wobei der erste schräge Kanal (56) in die Verteilerkammer (58) mündet, wobei der Fluidauslass (10) einen zweiten schrägen Kanal (60), der im Sammelkasten ausgebildet ist, und eine Sammelkammer (62), die in einer Verlängerung der zweiten Zirkulationsgruppen (28) ausgebildet ist, umfasst, wobei der zweite schräge Kanal (60) in die Sammelkammer (62) mündet.

12. Vorrichtung zur thermischen Regulierung (1) nach einem der Ansprüche 1 bis 4 und 10, bei der der Verteiler (6) ein Sammelkasten ist, wobei der Fluideinlass (8) eine erste Aussparung (64), die gegenüber den ersten Zirkulationsgruppen (26) ausgebildet ist, und der Fluidauslass (10) eine zweite Aussparung (66), die gegenüber den zweiten Zirkulationsgruppen (28) ausgebildet ist, umfasst, wobei die erste Aussparung (64) und die zweite Aussparung (66) durch eine Trennwand (74) des Sammelkastens voneinander getrennt sind.

13. Vorrichtung zur thermischen Regulierung (1) nach dem vorhergehenden Anspruch, bei der die erste Aussparung (64) zum ersten Querende (34) hin mündet und die zweite Aussparung (66) zum ersten Querende (34) hin mündet, insbesondere über einen geraden Kanal (68).

14. System zur thermischen Regulierung für ein Kraftfahrzeug, umfassend eine Vielzahl von Vorrichtungen zur thermischen Regulierung (1) nach einem der vorhergehenden Ansprüche und eine Vielzahl von Speicherorganen für elektrische Energie, wobei die Vorrichtungen zur thermischen Regulierung (1) entlang der Speicherorgane für elektrische Energie angeordnet sind, wobei das System zur thermischen Regulierung einen Verteilerblock umfasst, der mit den Verteilern (6) der Vorrichtungen zur thermischen Regulierung (1) verbunden ist.

## Claims

1. Thermal regulation device (1) for electrical energy storage components extending mainly in a longitudinal-transverse plane between a first longitudinal end (2) and a second longitudinal end (4), each of these longitudinal ends (2, 4) being equipped with a return box (22), the thermal regulation device (1) comprising a first tube (12), a second tube (14) and a collector (6), each of the tubes (12, 14) having a first end (18) connected to the collector (6) and a second end (20) connected to one of the return boxes (22), the tubes (12, 14) each comprising a plurality of channels (24) configured for the circulation of a heat transfer fluid distributed into at least a first circulation assembly (26) and a second circulation assembly (28) superimposed on one another in a transverse direction (T), the thermal regulation device being **characterised in that** the collector (6) comprises a heat transfer fluid inlet (8) and a heat transfer fluid outlet (10), the fluid inlet (8) being arranged on a first side of the longitudinal-transverse plane and the fluid outlet (10) being arranged on a second side, opposite to the first, of the longitudinal-transverse plane, the first circulation assembly (26) of each of the tubes (12, 14) opening into the fluid inlet (8) and the second circulation assembly (28) of each of the tubes (12, 14) opening into the fluid outlet (10), the device comprising a first transverse end (34) and a second transverse end (36) opposite to the first transverse end (34), a connection fitting (30) of the fluid inlet (8) and a connection fitting (32) of the fluid outlet (10) of the collector (6) being directed towards the first transverse end (34).

2. Thermal regulation device (1) according to the preceding claim, wherein the fittings (30, 32) are arranged in an extension of the collector (6), in the vicinity of the first transverse end (34) of the thermal regulation device (1).

3. Thermal regulation device (1) according to any one of the preceding claims, wherein the collector (6) is brazed onto the tubes (12, 14).

4. Thermal regulation device (1) according to any one of the preceding claims, wherein each return box (22) fluidically connects the first circulation assembly (26) and the second circulation assembly (28) of a tube (12, 14).

5. Thermal regulation device (1) according to any one of the preceding claims, wherein the first end (18) of the tubes (12, 14) comprises a first folded portion (42) fluidically connected to the first circulation assembly (26) and a second folded portion (44) fluidically connected to the second circulation assembly (28), the folded portions (42, 44) being separated from one another by a notch (46) formed in the tube (12, 14), the folded portions (42, 44) opening into the collector (6).

6. Thermal regulation device (1) according to the preceding claim, wherein the first portion (42) and the second portion (44) of the same tube (12, 14) are folded in opposite directions relative to the longitudinal-transverse plane.

7. Thermal regulation device (1) according to the preceding claim, wherein the first portion (42) of the first tube (12) and the first portion (42) of the second tube (14) are folded on the same side of the thermal regulation device (1), the second portion (44) of the first tube (12) and the second portion (44) of the second tube (14) being folded on another opposite side of the thermal regulation device (1).

8. Thermal regulation device (1) according to any one of the preceding claims, wherein the collector (6) comprises a first cylinder (38) comprising the fluid inlet (8) and a second cylinder (40) comprising the fluid outlet (10), the cylinders (38, 40) having insertion slots (48) for the folded portions (42, 44).

9. Thermal regulation device (1) according to any one of the preceding claims, wherein a face of the collector (6) in the vicinity of a transverse end (34, 36), in particular the second transverse end (36), of the thermal regulation device (1) comprises a plate (41) connecting the first cylinder (38) and the second cylinder (40).

10. Thermal regulation device (1) according to any one of claims 1 to 4, wherein the collector (6) has a first receiving face for the first tube (12) and a second receiving face for the second tube (14), opposite to the first receiving face, the tubes (12, 14) being inserted into the collector (6) at the level of the receiving faces.

11. Thermal regulation device (1) according to any one of claims 1 to 4 and 10, wherein the collector (6) is a collection box, the fluid inlet (8) comprising a first oblique conduit (56) formed in the collection box and a distribution chamber (58) formed in an extension of the first circulation assemblies (26), the first oblique conduit (56) opening into the distribution chamber (58), the fluid outlet (10) comprising a second oblique conduit (60) formed in the collection box and a collection chamber (62) formed in an extension of the second circulation assemblies (28), the second oblique conduit (60) opening into the collection chamber (62).

12. Thermal regulation device (1) according to any one of claims 1 to 4 and 10, wherein the collector (6) is a collection box, the fluid inlet (8) comprising a first recess (64) formed facing the first circulation assemblies (26) and the fluid outlet (10) comprising a second recess (66) formed facing the second circulation assemblies (28), the first recess (64) and the second recess (66) being separated by a partition (74) of the collection box.

13. Thermal regulation device (1) according to the preceding claim, wherein the first recess (64) opens onto the first transverse end (34) and the second recess (66) opens onto the first transverse end (34), in particular via a straight conduit (68).

14. Thermal regulation system for a motor vehicle, comprising a plurality of thermal regulation devices (1) according to any one of the preceding claims and a plurality of electrical energy storage components, the thermal regulation devices (1) being arranged along the electrical energy storage components, the thermal regulation system comprising a distribution manifold connected to the collectors (6) of the thermal regulation devices (1).
